# EUROPEAN PATENT SPECIFICATION

(11) **EP 3 141 035 B1**
(45) Date of publication and mention of the grant of the patent: **26.09.2018**
(21) Application number: 15789305.8
(22) Date of filing: 07.05.2015
(51) Int. Cl.: H04W 36/00

(54) **METHOD AND APPARATUS FOR HANDOVER PROCEDURES IN A COMMUNICATION NETWORK**
VERFAHREN UND VORRICHTUNG FÜR ÜBERGABEPROZESSE IN EINEM KOMMUNIKATIONSNETZWERK
PROCÉDÉ ET APPAREIL POUR PROCÉDURES DE TRANSFERT INTERCELLULAIRE DANS UN RÉSEAU DE COMMUNICATION

(30) Priority: 09.05.2014 US 201461991026 P
(43) Date of publication of application: 15.03.2017
(73) Proprietor: Telefonaktiebolaget LM Ericsson (publ), 164 83 Stockholm (SE)
(72) Inventor: SUNELL, Kai-Erik, S-168 73 Bromma (SE)
(74) Representative: Zacco Sweden AB
(86) International application number: PCT/SE2015/050512
(87) International publication number: WO 2015/171065

(56) References cited:
- US-A1- 2013 083 753
- ERICSSON: "Capabilities and Signalling for Low Cost MTC UEs", 3GPP DRAFT; R2-140669 - CAPABILITIES AND SIGNALING FOR LOW COST MTC UES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Prague, Czech Republic; 20140210 - 20140214 9 February 2014 (2014-02-09), XP050791972, Retrieved from the Internet: URL:http://www.3gpp.org/ftp/Meetings_3GPP_ SYNC/RAN2/Docs/ [retrieved on 2014-02-09]
- ERICSSON: "Handover for low cost MTC feature", 3GPP DRAFT; R2-141311, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 21 March 2014 (2014-03-21), XP050817461, Retrieved from the Internet: URL:http://www.3gpp.org/ftp/tsg_ran/WG2_RL 2/TSGR2_85bis/Docs/ [retrieved on 2014-03-21]
- "LTE; Evolved Universal Terrestrial Radio Access (E-UTRA); Radio Resource Control (RRC); Protocol specification (3GPP TS 36.331 version 11.7.0 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V11.7.0, 1 March 2014 (2014-03-01), XP014180750,
- ERICSSON: "Introduction of category handling for low complexity UEs (option 1)", 3GPP DRAFT; 36331_CRYYYY_(REL-12)_R2-142121, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 9 May 2014 (2014-05-09), XP050818284, Retrieved from the Internet: URL:http://www.3gpp.org/ftp/tsg_ran/WG2_RL 2/TSGR2_86/Docs/ [retrieved on 2014-05-09]
- HUAWEI ET AL.: 'Introduction of Category 0 for low cost MTC;' 3GPP TSG-RAN WG2 #85; R2-140964; 14 February 2014, PRAGUE, CZECH REPUBLIC, XP050754660
- ERICSSON: 'Handling of low complexity UE categories during handover;' 3GPP TSG-RAN WG2 #86; R2-142120; 18 May 2014, SEOUL, SOUTH KOREA, XP050790087

## Description

### Technical Field

The present invention relates to a method and apparatus for handover procedures in a communication network, for example handover procedures involving low complexity category user equipment.

### Background

Communication devices such as terminals are also known as, for example, User Equipment (UE), mobile terminals, wireless terminals and/or mobile stations. Terminals are enabled to communicate wirelessly in a cellular communications network or wireless communication system, sometimes also referred to as a cellular radio system or cellular network. The communication may be performed e.g. between two terminals, between a terminal and a regular telephone and/or between a terminal and a server via a Radio Access Network (RAN) and possibly one or more core networks, comprised within the cellular communications network.

Examples of wireless communication systems are Long Term Evolution (LTE), Universal Mobile Telecommunications System (UMTS) and Global System for Mobile communications (GSM).

Terminals may further be referred to as mobile telephones, cellular telephones, laptops, or surf plates with wireless capability, just to mention some further examples. The terminals in the present context may be, for example, portable, pocket-storable, hand-held, computer-comprised, or vehicle-mounted mobile devices, machine to machine devices, enabled to communicate voice and/or data, via the RAN, with another entity, such as another terminal or a server.

The cellular communications network covers a geographical area which is divided into cell areas, wherein each cell area is served by an access node such as a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes, for example such as macro eNodeB, home eNodeB or pico base stations, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the terminals within range of the base stations. In the context of this disclosure, the expression Downlink (DL) is used for the transmission path from the base station to the mobile station. The expression Uplink (UL) is used for the transmission path in the opposite direction i.e. from the mobile station to the base station.

In 3rd Generation Partnership Project (3GPP) Long Term Evolution (LTE), base stations, which may be referred to as eNodeBs or eNBs, may be directly connected to one or more core networks.

Radio access standards relating to 3GPP LTE have been written in order to support high bitrates and low latency both for uplink and downlink traffic. Data transmission in LTE is controlled by the radio base station.

One function of 3GPP cellular radio technologies is the control of user mobility by using the Radio Resource Control (RRC) and X2AP protocols. The network controls the handover of UEs in a RRC Connected mode from one cell to another, whereas a UE in Idle mode performs cell selection and reselection itself. Embodiments herein are illustrated with examples from the Evolved Universal Terrestrial Radio Access (EUTRA), also known as the LTE system.

When a UE is handed over from a source cell to a target cell, handover preparation is needed. Upon handover preparation the target radio base station or eNB is provided with the current UE RRC configuration, for example which may be comprised in a handover preparation information message (such as the *HandoverPreperationlnformation* message, for example as described in 3GPP Technical Specification TS 36.331, version 12.1.0). This message is used to transfer the E-UTRA RRC information used by the target eNB during handover preparation, including UE capability information. The target eNB decides the RRC configuration after the handover and therefore a RRC configuration message is transparently sent to the UE via the source eNB as an octet string comprised in the handover command. Normally full configuration is required if the target eNB has a different Access Stratum (AS) version than the source eNB.

If the RRC configuration in the handover preparation message is incomplete or the source cell has configured the UE with a RRC protocol version that is not comprehended by the target eNB, the target eNB typically performs a full configuration (if possible), i.e. performs a reconfiguration from scratch. Otherwise the target eNB may modify or maintain the current RRC configuration.

3GPP has recently agreed within the scope of low-cost Machine Type Communication (MTC) work item to introduce a new UE category termed as a "low complexity category" (which may also be referred to as category 0, or category 11). The category 0 is included in the 3GPP Technical Specification TS 36.331 RRC, Rel-12, version 12.5.0. A problem arises, since this new category is less capable than legacy UE categories, for example, legacy category 1. Furthermore, the legacy categories (including categories 1, 2, 3, 4 and 5 that were first introduced with Release 8 of the RRC protocol), such as category 1, are mandatory to signal even though the low complexity category UE does not have any such category, and thus full configuration will always be required from the legacy eNB because it has a different AS version than the source eNB. In other words, since a legacy UE-Category field is mandatory required to be present in the UE-EUTRA-Capability container, omitting such a mandatory field results in a decoding error, and therefore to avoid this all UEs shall indicate one category in the mandatory field even if they do not support any such category.

Accordingly, upon handover preparation, a legacy target eNB that does not comprehend the new low complexity category may erroneously assume that the UE may be successfully configured with the indicated legacy category, for example a legacy category such as category 1. Consequently, the handover fails and the UE experiences a radio link failure. Subsequently, the UE tries to trigger RRC Connection Re-establishment which also fails. Finally the UE transitions to Idle mode where it searches for suitable cells.

This has the disadvantage of causing unnecessary signaling due to the failed handovers and the unsuccessful RRC connection re-establishment requests, which results in the inefficient use of bandwidth.
Ericsson: "Capabilities and Signalling for Low Cost MTC UEs", 3GPP draft, R2-140669 - Capabilities and signaling for low cost MTC UEs, 3rd generation partnership project (3GPP), mobile competence centre; 650, Route des lucioles; F-06921 Sophia-Antipolis Cedex, vol. RAN WG2, no. Prague, Czech Republic; 20140210 - 20140214 9 February 2014,
Ericsson: "Handover for low cost MTC feature", 3GPP draft, R2-141311, 3rd generation partnership project (3GPP), mobile competence centre; 650, Route des lucioles; F-06921 Sophia-Antipolis Cedex, vol. RAN WG2, no. Valencia, Spain; 20140331 - 20140404 21 March 2014, and
"LTE: Evolved Universal Terrestrial Radio Access (E-UTRA); Radio Resource Control (RRC); Protocol specification (3GPP RS 36.331 version 11.7.0 Release 11)", Technical Specification, European Telecommunications Standards Institute (ETSI), 650, Route des lucioles; F-06921 Sophia-Antipolis, vol. 3GPP RAN 2, vo. V11.7.0, 1 March 2104 each discuss different aspects of LTE.

### Summary

It is an aim of the present invention to provide a method and apparatus which obviate or reduce at least one or more of the disadvantages mentioned above.

The invention is set out in the appended set of claims. The embodiments or examples of the following description which are not covered by the appended claims are considered as not being part of the present invention.

According to a first aspect of the present invention there is provided a method in a user equipment. The method comprises the step of providing capability information in a capability container relating to the user equipment, wherein the capability information provides an indication of the earliest access stratum (AS) version that defines a low complexity user equipment category that is supported by the user equipment.
According to another aspect of the present invention, there is provided a method in a user equipment. The method comprises the step of providing a protocol field in a UE-EUTRA-Container to indicate that the UE does not support legacy categories 1, 2, 3, 4 or 5.
According to another aspect of the present invention, there is provided a method in a user equipment. The method comprises the step of providing a protocol field in a UE-EUTRA-Container to indicate that the UE only supports a low complexity category relating to Release 12 and above.
According to another aspect of the present invention there is provided a method in a target base station during a handover preparation procedure of a user equipment (UE) from a source base station to the target base station. The method comprises the steps of receiving a capability container relating to the user equipment, and interpreting capability information in the capability container to determine the earliest access stratum (AS) version that defines a low complexity user equipment category that is supported by the user equipment. The result of the interpretation is used to determine whether the handover operation should be continued with the user equipment.
According to another aspect of the present invention, there is provided a user equipment comprising a processor module and a protocol field module. The protocol field module is adapted to provide capability information in a capability container relating to the user equipment, wherein the capability information provides an indication of the earliest access stratum (AS) version that defines a low complexity user equipment category that is supported by the user equipment.

According to another aspect of the present invention, there is provided a network node of a communications network, for example a target base station node, for example a target eNB. The network node comprises a processing module, an interpreting module and a processor module. The receiving module is adapted to receive a capability container relating to a user equipment. The interpreting module is adapted to interpret capability information in the capability container to determine the earliest access stratum (AS) version that defines a low complexity user equipment category that is supported by the user equipment. The processor module is adapted to use the result of the interpretation module to determine whether a handover operation should be performed with the user equipment.

The capability information comprises a protocol field in the capability container relating to the user equipment. The protocol field comprises a legacy information element that is reused to provide the capability information. The legacy information element comprises an *AccessStratumRelease* information element.

### Brief description of the drawings

For a better understanding of examples of the present invention, and to show more clearly how the examples may be carried into effect, reference will now be made, by way of example only, to the following drawings in which:
Figure 1 shows an example of a communication network in which embodiments of the invention may be used;
Figure 2 shows a method according to an embodiment of the invention;
Figure 3 shows a method according to another embodiment of the invention;
Figure 4 shows a method according to another embodiment of the invention;
Figure 5 shows a method according to another embodiment of the invention;
Figure 6 shows a method according to another embodiment of the invention;
Figure 7 shows a user equipment according to an embodiment of the invention; and
Figure 8 shows a network node according to an embodiment of the invention.

### Detailed description

The embodiments of the invention, as described herein, introduce an additional or new protocol field in a UE capability container, or reuse a legacy information element, where the UE indicates the earliest supported Access Stratum (AS) release or version. A network node, such as a target eNB can obtain the indicator from the UE capability container, which may be included in a handover preparation information message provided, for example, by a source eNB. If the target eNB does not support the indicated earliest supported AS release of the UE, the handover preparation can be rejected by the target eNB. In that way, the source eNB can try to handover the UE to another eNB or to another frequency. By "new" or "additional" protocol field it is meant that the protocol field is provided for the purpose of assisting handover for low complexity category UE devices.

The embodiments of the invention described herein have the advantage that unnecessary signaling caused by failed handovers and unsuccessful RRC connection re-establishments are avoided. Consequently, network resources are used in a more efficient manner and UE battery lifetime is prolonged.

### Terminologies

The following common terminologies are used in the embodiments and are elaborated below:
Network node: In some embodiments a term "network node" is used and it may correspond to any type of radio network node or any network node, which communicates with at least a radio network node.
User equipment: In some embodiments the non-limiting term user equipment (UE) is used and it refers to any type of wireless device communicating with a radio network node in a cellular or mobile communication system. Examples of UEs are target device, device to device UE, MTC UE or UE capable of machine to machine communication, PDA, iPAD, Tablet, mobile terminals, smart phone, laptop embedded equipped (LEE), laptop mounted equipment (LME), USB dongles etc.

It is noted that although terminology from 3GPP LTE/SAE has been used in this disclosure to exemplify the embodiments herein, this should not be seen as limiting the scope of the embodiments herein to only the aforementioned system. Other wireless systems may also benefit from exploiting the ideas covered within this disclosure.

It is also noted that terminology such as a first network node and a second network node should be considered to be non-limiting and does in particular not imply a certain hierarchical relation between the two.

In this section, the embodiments herein will be illustrated in more detail by a number of exemplary embodiments. It should be noted that these embodiments are not mutually exclusive. Components from one embodiment may be tacitly assumed to be present in another embodiment and it will be obvious to a person skilled in the art how those components may be used in the other exemplary embodiments.

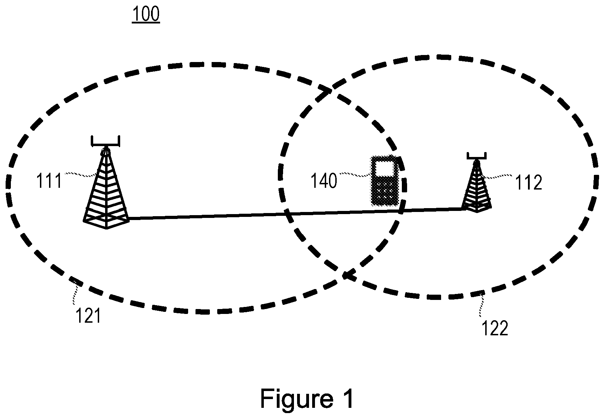

Prior to describing the embodiments of the present invention, reference will first be made to Figure 1, which depicts parts of one or more wireless communications networks 100 in which the embodiments herein may be implemented. The one or more wireless communications networks 100 may for example be LTE, UMTS, GSM, and 3GPP wireless communications networks, or any cellular wireless communications network or system capable of handling UEs of more than one category or of different capabilities.

The wireless communications network 100 comprises a plurality of base stations and/or other network nodes. More specifically, the wireless communications network 100 comprises a first network node 111. The first network node 111 is also referred to herein as a source network node. The wireless communications network 100 further comprises a second network node 112. The second network node 112 is also referred to herein as a candidate or target network node. The first and second network nodes 111, 112 may be a base station, such as an eNB. The base station may also be referred to as a NodeB, an evolved Node B (eNB, eNode B), a base transceiver station (BTS), Access Point Base Station, base station router, or any other network unit capable of communicating with a user equipment within a cell served by the base station depending e.g. on the radio access technology and terminology used.

In some embodiments the first network node 111 and the second network node 112 belong to two different wireless communications networks. For example, the first network node 111 may belong to an UMTS network and the second network node 112 may belong to an LTE network. The first network node 111 may then be a Radio Network Controller (RNC) in the UMTS network. The first network node 111 may serve a first cell 121, also referred to as a source cell, the second network node 112 may serve a second cell 122, also referred to as a candidate cell or target cell.

A cell is a geographical area where radio coverage is provided by network node equipment such as WiFi AP equipment, base station equipment at a base station site or at remote locations in Remote Radio Units (RRU). The first network node is an example of such network node equipment. The cell definition may also incorporate frequency bands and radio access technology used for transmissions, which means that two different cells may cover the same geographical area but using different frequency bands. Each cell is identified by an identity within the local radio area, which is broadcast in the cell. Another identity for identifying cells uniquely in the whole of a wireless communication network is also broadcasted in the cells. Network nodes, such as base stations and WiFi AP, communicate over the air or radio interface operating on radio frequencies with the user equipments within range of the network nodes. The user equipment transmit data over the radio interface to network nodes, such as base stations and WiFi AP, in Uplink (UL) transmissions, and network nodes, such as WiFi AP and base stations, transmit data over an air or radio interface to the user equipment in Downlink (DL) transmissions.

The first network node 111 communicates with user equipments in the first cell 121, such as a user equipment 140 of the first category, also referred to as an UE or a wireless device, which is to be handed over to a cell different from the first cell 121. The handover may, for example, be due to mobility of the user equipment 140. The user equipment 140 is of the first category, i.e. a low complexity category (or category 0), for example an MTC user equipment.

The user equipment 140 may e.g. be a mobile terminal or a wireless terminal, a mobile phone, a computer such as a laptop, a Personal Digital Assistants (PDAs) or a tablet computer, sometimes referred to as a surf plate, with wireless capability, or any other radio network units capable of communicating over a radio link in a wireless communications network. It is noted that the term user equipment used in this document also covers other wireless devices such as Machine to machine (M2M) devices, even though they do not have any user.

More specifically the following are embodiments related to the user equipment, target network node and source network node, for example relating to handover procedures that may involve user equipment having a low complexity category.

According to one embodiment, there is defined an enhanced or new protocol UE capability container as defined in TS 36.331 Radio Resource Control (RRC) protocol, version 12.1.0, sub-clause 6.3.6. A field indicates the earliest supported AS release or version.

An example of one possible way of specifying the field, according to an embodiment of the invention, is to define an enumerated list of AS release values and make use of the legacy AS indication information element which is then defined as follows (and with the further details given later in the application relating to protocol field *"earliestSupported-AS")*:

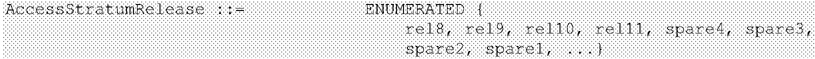

Alternatively, according to another embodiment a new, i.e. additional information element can be defined with less code points than in a legacy information element because the low complexity categories are introduced so late as in Rel-12.

The additional information element can be composed of only a code point that indicates whether the earliest supported AS version is earlier than Rel-12, i.e. where the first low complexity category is introduced. According to one example the additional protocol field is defined in terms of abstract syntax notation in the following manner:

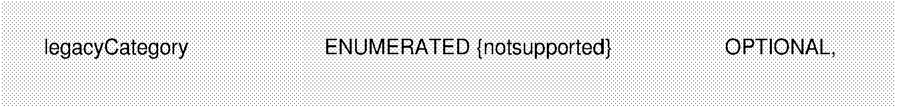

This type of indication means that the UE indicates that its earliest supported AS version is Rel-12 and therefore the UE does not support any of the legacy categories, i.e. does not support categories 1, 2, 3, 4 or 5 that were introduced with Rel-8. As such, by specifying that the earliest supported AS version is Rel-12, this implies that the UE does not support legacy UE categories. An example of the semantics of the protocol field is described below:

### legacyCategory

The presence indicates that the UE does not support the indicated Rel-8 category 1, 2, 3, 4 or 5. This can be used by a target eNB during handover preparation to decide if a RRC configuration can be prepared with the indicated Rel-8 category. Absence of the field means that the UE supports the indicated Rel-8 category.

In an embodiment that uses a legacy information element to convey the required capability information (instead of providing an additional or new protocol field as described above) the introduction of the protocol field based on the reused *AccessStratumRelease* information element is exemplified below where the field is included in a noncritical extension defined in terms of abstract syntax notation.

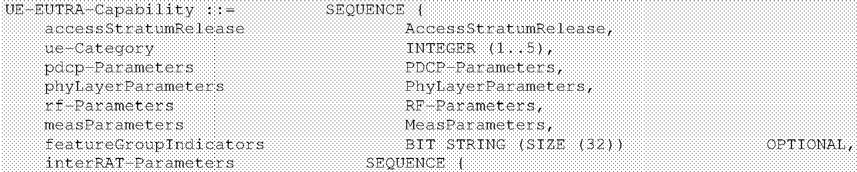

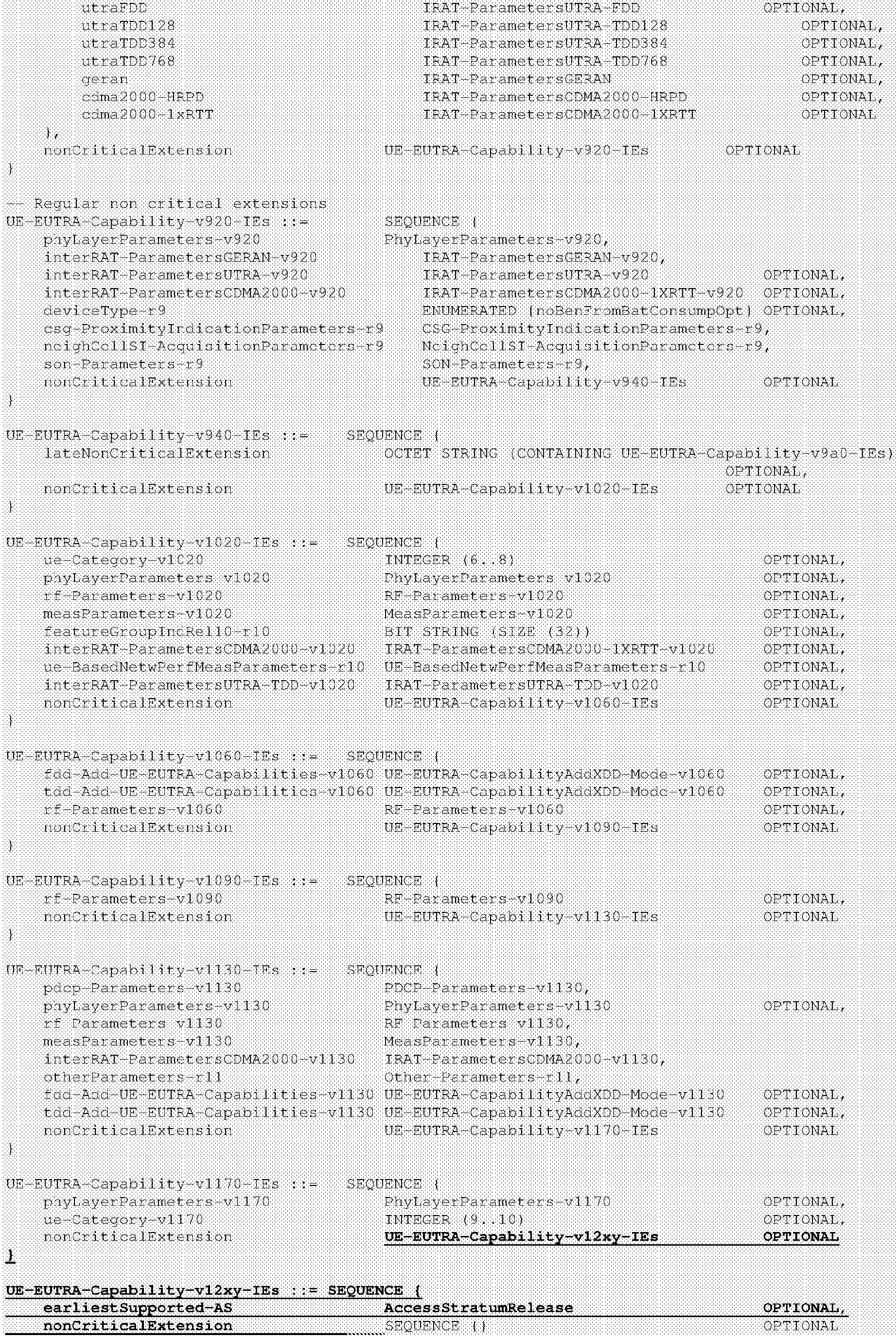

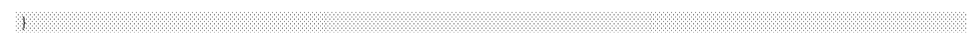

The new information according to embodiments of the invention is shown in bold at the bottom of the table above.

The enumeration may contain spare values for future releases, and they can be used in the same manner as with the normal AS release indicator. The protocol field description includes semantics of the field and explanation of the possible use at the network side, for example as described below:

### earliestSupported-AS

The protocol field *"earliestSupported-AS"* indicates, e.g. to a target eNB, the earliest Access Stratum release that defines a low complexity category that is supported by the UE. It is noted that the expression *"earliestSupported-AS"* is merely an example of the notation that may be used, and that other expressions may be used to denote the same field. This can be used by other network nodes, for example by a target eNB, to decide if handover is possible for the UE. If this field is not present, the target (e.g. eNB) assumes that the UE can support all categories from the Rel-8 version of the RRC protocol. In this manner, this is all of the information that the target, such as an eNB needs, and a target eNB may also infer other information, for example that the UE supports a low complexity category that is not supported by the target eNB, even though the target eNB does not comprehend the exact value of the category because it does not implement a future Release. This is sufficient for a target eNB to make a decision about whether the UE should be handed over or not.

It is noted that the reference to the expression *"AccessStratumRelease"* in the syntax above is merely an example of the notation that may be used, and that other expressions may be used to denote the same field.

The embodiments of the invention make use of methods for populating the additional protocol field in the UE side of the radio interface and interpreting the populated value at the network side during handover preparation. An example of the method at the UE side of the radio interface is as follows:
1. If the UE supports low complexity categories and does not support any of the legacy categories, include the protocol field in the message. Otherwise go to step 3.
2. Set the protocol field to a value that indicates the earliest AS version that defines a low complexity category that is supported by the UE.
3. Procedure ends.

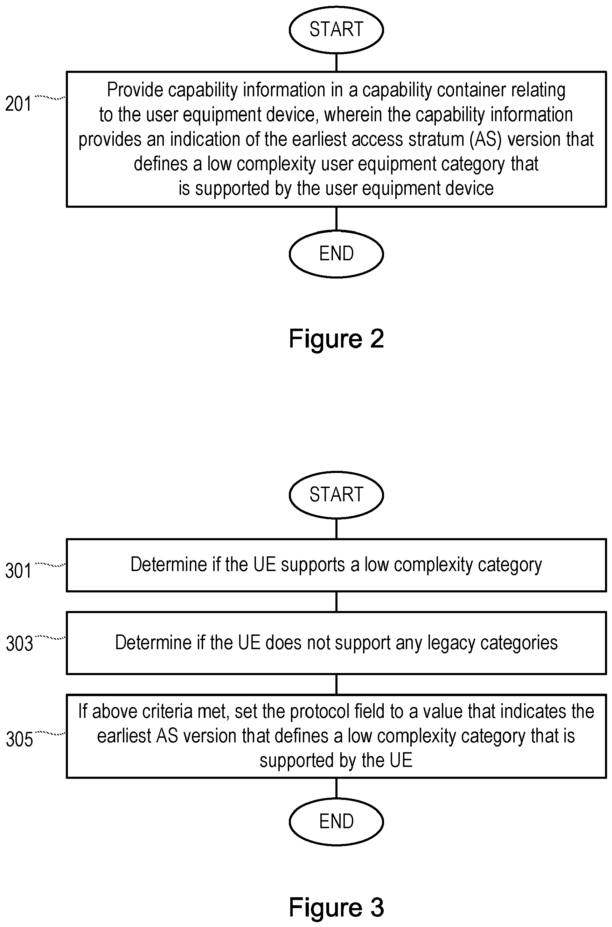

Figure 2 shows the steps performed in a user equipment according to an embodiment of the invention. The method comprises the step of providing capability information in a capability container relating to the user equipment, wherein the capability information provides an indication of the earliest access stratum (AS) version that defines a low complexity user equipment category that is supported by the user equipment, step 201.

The capability information may comprise a protocol field in the capability container relating to the user equipment.

According to one embodiment the protocol field comprises an additional protocol field. For example, the additional protocol field can provide an indication as to whether the earliest supported AS version is earlier than Release 12.

In such an embodiment the presence of the additional protocol field in the capability container of the UE provides an indication to other network nodes that the UE is not capable of supporting other UE categories of earlier AS versions (for example cannot support categories 1, 2, 3, 4 or 5 of versions Rel-8, Rel-9, Rel-10 or Rel-11).

In other words, in such an embodiment the absence of the additional protocol field in the capability container of the UE provides an indication to other network nodes that the UE is capable of supporting other UE categories of earlier AS versions, including categories 1 to 5 of Rel-8 and above.

The additional protocol field may comprise a one bit indicator, and may reference, for example, a *LegacyCategory* information element.

According to another embodiment the protocol field comprises a legacy information element that is reused to provide the capability information. For example, the protocol field may comprise an *AccessStratumRelease* information element.

In such an embodiment the A*ccessStratumRelease* information element may comprise an enumerated list of the AS release values supported by the UE.

The A*ccessStratumRelease* information element may further comprise one or more spare values for use with future AS release values. The protocol field may be included in a noncritical extension defined in terms of abstract syntax notation.

Figure 3 shows the method performed in a user equipment according to another embodiment of the present invention.

In step 301 it is determined if the UE supports a low complexity category. In step 303 it is determined if the UE does not support any legacy categories. If these criteria are met, the protocol field is set to a value that indicates the earliest AS version that defines a low complexity category that is supported by the UE, step 305.

The capability information (for example provided as an additional protocol field or a reused information element) can be used by a target base station during a handover preparation procedure to determine if handover is possible for the UE with that target base station.

Upon handover preparation the source eNB normally provides the UE-EUTRA capability information to the target eNB. The target eNB requires a method for interpretation of the capability information, the results of which can be used to assist with a decision regarding whether to accept or reject the handover preparation. According to an embodiment of the invention, the target eNB logic for interpretation of the value can be described, for example, with the following method:
1. If the *earliestSupported-AS* release is present and set to an unknown value or the value is present but unspecified in the eNB's supported RRC protocol version, consider that the UE does not support the indicated Rel-8 category and go to step 5.
2. If the *earliestSupported-AS* release is present and set to a value that is higher than the target eNB is able to handle, consider that the UE does not support the indicated Rel-8 categories and go to step 5.
3. If the *earliestSupported-AS* release is present and set to a value that is specified in the eNB's supported RRC protocol version and the AS release indication is comprehended and supported, consider that the UE does not support the indicated Rel-8 categories and go to step 5.
4. If the earliestSupported-AS release is absent, consider that the UE supports the indicated Rel-8 category.
5. Interpretation procedure ends.

After the interpretation, the target eNB can decide whether to reject or accept the handover preparation. This type of decision can be based on many aspects where the outcome of the above-described interpretation method is taken into account.

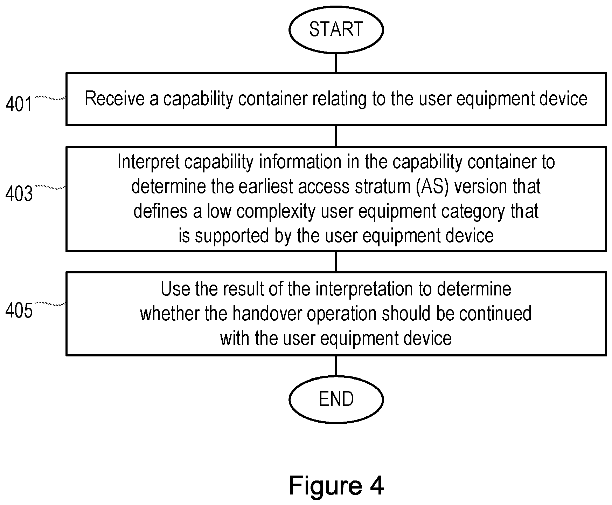

Figure 4 shows a method performed in a target base station according to an embodiment of the present invention, during a handover preparation procedure of a user equipment (UE) from a source base station to the target base station. The method comprises the step of receiving a capability container relating to the user equipment, step 401. In step 403 capability information in the capability container is interpreted to determine the earliest access stratum (AS) version that defines a low complexity user equipment category that is supported by the user equipment. The result of the interpretation is used to determine whether the handover operation should be continued with the user equipment, step 405.

The interpretation step may comprise determining if an additional protocol field is present or absent, wherein the additional protocol field provides an indication as to whether the earliest supported AS version is earlier than Release 12.

In such an embodiment, determining the presence of the additional protocol field in the capability information relating to the UE provides an indication that the UE is not capable of supporting other UE categories of earlier AS versions. As a consequence, the target base station may take action to halt a handover operation with that UE. For example, upon determining that the additional protocol field is present, the method may further comprises the step of discontinuing a handover procedure with the UE.

In an alternative embodiment, determining the absence of the additional protocol field in the capability information relating to the UE provides an indication that the UE is capable of supporting other UE categories of earlier AS versions, including categories 1 to 5 of Rel-8 and above. Following a determination that the additional protocol field is absent, the method may further comprise the step of continuing a handover procedure with the UE.

The additional protocol field may comprise or may reference, for example, a *LegacyCategory* information element. This may comprise a one bit flag.

The interpretation step performed in the target base station may comprise the step of determining from a reused information element an indication of the earliest access stratum (AS) version that defines a low complexity user equipment category that is supported by the UE.

The interpretation step performed in the target base station may comprise the step of determining if an earliestSupported-AS release protocol field is present and set to an unknown value, or if the value is present but unspecified in an RRC protocol version supported by the target base station, and if so, considering that the UE does not support an AS Rel-8 category.

The interpretation step performed in the target base station may comprise the step of determining if an "earliestSupported-AS release protocol field is present and set to a value that is higher than the target base station is able to handle, and if so, considering that the UE does not support an AS Rel-8 category.

The interpretation step performed in the target base station may comprise the step of determining if an earliestSupported-AS release is present and set to a value that is specified in an RRC protocol version supported by the target base station, and if the indicated UE category is comprehended and supported, and if so, considering that the UE does not support an AS Rel-8 category.

The interpretation step performed in the target base station may comprise the step of determining if an earliestSupported-AS release protocol field is absent, and if so, considering that the UE supports an AS Rel-8 category.

From the above it can be seen that in an embodiment where the method is performed in the target base station, the absence of a particular protocol field may indicate that the UE can support all categories from a predetermined version of the RRC protocol and above, for example wherein the predetermined version is version 8 of an RRC protocol and above.

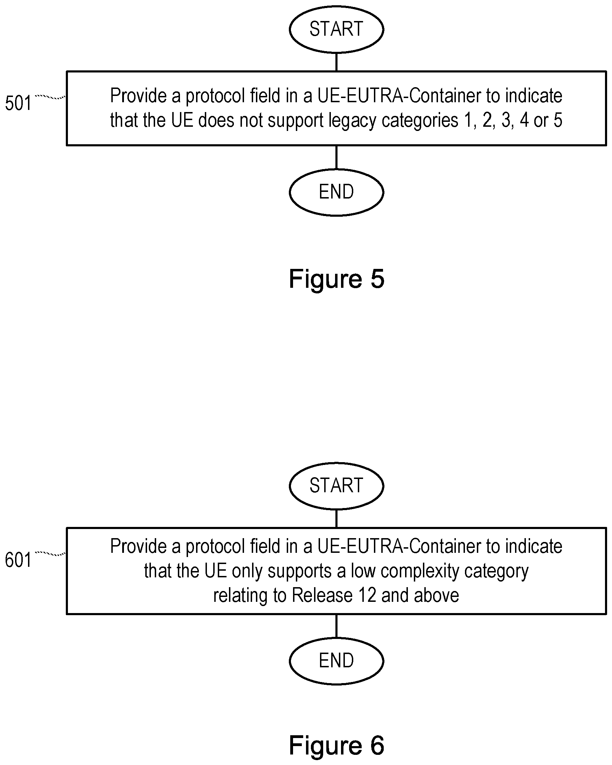

Figure 5 shows a method in a user equipment, according to another embodiment of the invention. The method comprises the step of providing a protocol field in a UE-EUTRA-Container to indicate that the UE does not support legacy categories 1, 2, 3, 4 or 5, step 501.

Figure 6 shows a method in a user equipment, according to another embodiment of the invention. The method comprises the step of providing a protocol field in a UE-EUTRA-Container to indicate that the UE only supports a low complexity category relating to Release 12 and above, step 601.

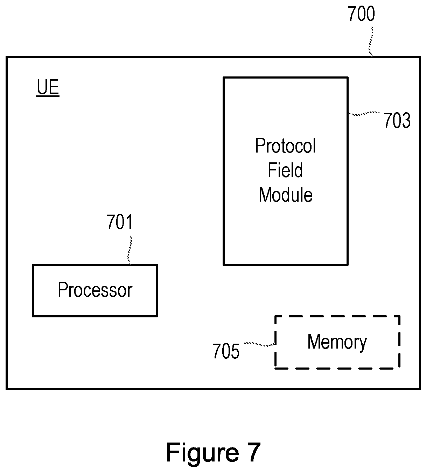

Figure 7 shows a user equipment 700 according to an embodiment of the invention. The user equipment 700 comprises a processor module 701 and a protocol field module 703. The protocol field module 703 is adapted to provide capability information in a capability container relating to the user equipment, wherein the capability information provides an indication of the earliest access stratum (AS) version that defines a low complexity user equipment category that is supported by the user equipment.

In the user equipment 700 of Figure 7, the processor module 701 may be adapted to perform the method steps described above, relating to the user equipment. The user equipment may comprise a memory 705.

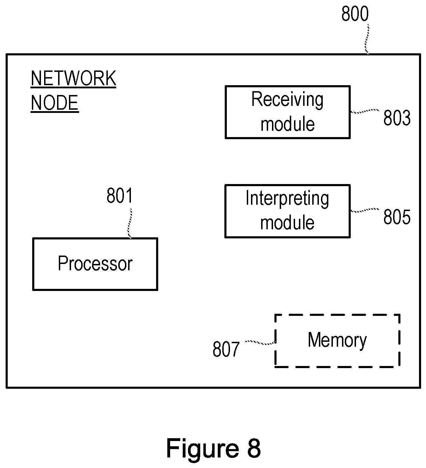

Figure 8 shows a network node 800 of a communications network according to another embodiment of the invention, for example a target base station during a handover procedure. The network node 800 comprises a processing module 801, a receiving module 803 and an interpreting module 805. The receiving module 801 is adapted to receive a capability container relating to a user equipment. The interpreting module 805 is adapted to interpret capability information in the capability container to determine the earliest access stratum (AS) version that defines a low complexity user equipment category that is supported by the user equipment. The processor module 801 is adapted to use the result of the interpretation module to determine whether a handover operation should be performed with the user equipment.

In the network node 800 of Figure 8, the processor module 801 may be adapted to perform the method steps as described above in relation to the target base station, for example target eNB.

From the above it can be seen that the embodiments of the invention introduce an additional protocol field (or reuse a legacy information element) in UE capability signaling to indicate the earliest Access Stratum version that defines a low complexity UE category that is supported by the UE. The embodiments of the invention define a method for setting the field value and another method in the target eNB to interpret the value. The outcome of the interpretation determines whether the UE supports legacy categories or not. This interpretation can be used as part of the decision regarding whether or not a handover procedure should be carried out between that UE and that target eNB.

For example, the embodiments of the invention provide a solution to a problem where a target and source eNBs may have different access stratum releases. If the target eNB is of an earlier version that the UE and the source eNB, the target eNB does not comprehend a category information field because it cannot decode future extensions. So, the information for the handover decision is in future extensions that are not comprehended by the target eNB, and therefore UE categories cannot be reliably used for the decision whether to perform a handover or not. Embodiments described herein have the advantage of using, for example, the *AccessStratumRelease* information element, which is forward compatible. The *AccessStratumRelease,* as described above, is a list that was defined in Rel-8, and basically contains code points for future releases (even though they are named as spare values they are still comprehended by all nodes). This means that the indication of *earliestSupported-AS* can indicate, e.g. to a target eNB that is based on a Rel-12 version, that the UE is of e.g. Rel-15, and that the UE has a low complexity category even though the target eNB that is based on Rel-12 is not capable of reading the exact category indication extension and the category number. The target eNB can, however, comprehend the acess stratum version indication, and accordingly it can, for example, reject a handover preparation if it does not know anything about the Rel-15 low complexity categories. As such, a part of the information that is in future extensions (which by definition cannot be comprehended by a legacy target eNB because it cannot decode future extensions) is effectively smuggled to the target eNB with the access stratum release indication, e.g. with the indication of *earliestSupported-AS* version.

Thus, a benefit of the embodiments described herein is that the ambiguities with category handling are avoided for low complexity UEs by using a protocol field, for example a simple one-bit indicator that overrides the mandatory present legacy category field, or a reused protocol field to identify a list of supported AS versions.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method performed in a user equipment, the method comprising the step of providing capability information in a capability container relating to the user equipment, wherein the capability information provides an indication of the earliest access stratum, AS, version that defines a low complexity user equipment category that is supported by the user equipment (step 201), wherein the capability information comprises a protocol field in the capability container relating to the user equipment, wherein the protocol field comprises a legacy information element that is reused to provide the capability information, and wherein the legacy information element comprises an *AccessStratumRelease* information element.

2. A method as claimed in claim 1, wherein the protocol field comprises an additional protocol field.

3. A method as claimed in claim 2, wherein the additional protocol field provides an indication as to whether the earliest supported AS version is earlier than Release 12.

4. A method as claimed in claim 3, wherein presence of the additional protocol field in the capability container of the UE provides an indication to other network nodes that the UE is not capable of supporting other UE categories of earlier AS versions.

5. A method as claimed in claim 3, wherein absence of the additional protocol field in the capability container of the UE provides an indication to other network nodes that the UE is capable of supporting other UE categories of earlier AS versions, including categories 1 to 5 of Rel-8 and above.

6. A method as claimed in any one of claims 2 to 5, wherein the additional protocol field comprises a one bit indicator, or references a *LegacyCategory* information element.

7. A method as claimed in claim 1, wherein the A*ccessStratumRelease* information element comprises an enumerated list of the AS release values supported by the UE.

8. A method as claimed in claim 1, wherein the A*ccessStratumRelease* information element further comprises one or more spare values for use with future AS release values.

9. A method as claimed in any one of claims 1 to 8, wherein the protocol field comprises an *earliestSupported-AS* protocol field, for indicating the earliest access stratum release that defines a low complexity category that is supported by the UE.

10. A method performed in a target base station during a handover preparation procedure of a user equipment (UE) from a source base station to the target base station, the method comprising the steps of:
receiving a capability container relating to the user equipment (step 401);
interpreting capability information in the capability container to determine the earliest access stratum (AS) version that defines a low complexity user equipment category that is supported by the user equipment (step 403), wherein the capability information comprises a protocol field in the capability container relating to the user equipment, wherein the protocol field comprises a legacy information element that is reused to provide the capability information, and wherein the legacy information element comprises an *AccessStratumRelease* information element; and
using the result of the interpretation to determine whether the handover operation should be continued with the user equipment (step 405).

11. A method as claimed in claim 10, wherein the interpretation step comprises:
determining if an additional protocol field is present or absent, wherein the additional protocol field provides an indication as to whether the earliest supported AS version is earlier than Release 12.

12. A method as claimed in claim 11, wherein determining the presence of the additional protocol field in the capability information relating to the UE provides an indication that the UE is not capable of supporting other UE categories of earlier AS versions.

13. A method as claimed in claim 12, wherein following a determination that the additional protocol field is present, the method further comprises the step of discontinuing a handover procedure with the UE.

14. A method as claimed in claim 11, wherein determining the absence of the additional protocol field in the capability information relating to the UE provides an indication that the UE is capable of supporting other UE categories of earlier AS versions, including categories 1 to 5 of Rel-8 and above.

15. A method as claimed in claim 14, wherein following a determination that the additional protocol field is absent, the method further comprises the step of continuing a handover procedure with the UE.

16. A method as claimed in any one of claims 11 to 15, wherein the additional protocol field comprises a one bit indicator, or references a *LegacyCategory* information element.

17. A method as claimed in any one of claims 10 to 16, wherein absence of a particular protocol field indicates that the UE can support all categories from a predetermined version of the RRC protocol and above.

18. A user equipment (700) comprising:
a processor module (701); and
a protocol field module (703);
wherein the protocol field module is adapted to provide capability information in a capability container relating to the user equipment, wherein the capability information provides an indication of the earliest access stratum (AS) version that defines a low complexity user equipment category that is supported by the user equipment, wherein the capability information comprises a protocol field in the capability container relating to the user equipment, wherein the protocol field comprises a legacy information element that is reused to provide the capability information, and wherein the legacy information element comprises an *AccessStratumRelease* information element.

19. A user equipment (700) as claimed in claim 18, wherein the processor module (701) is adapted to perform a method as defined in any one of claims 2 to 12.

20. A network node (800) of a communications network, the network node (800) comprising:
a processing module (801);
a receiving module (803) adapted to receive a capability container relating to a user equipment; and
an interpreting module (805) adapted to interpret capability information in the capability container to determine the earliest access stratum (AS) version that defines a low complexity user equipment category that is supported by the user equipment, wherein the capability information comprises a protocol field in the capability container relating to the user equipment, wherein the protocol field comprises a legacy information element that is reused to provide the capability information, and wherein the legacy information element comprises an *AccessStratumRelease* information element;
wherein the processor module (801) is adapted to use the result of the interpretation module to determine whether a handover operation should be performed with the user equipment.

21. A network node (800) as claimed in claim 20, wherein the processor module (801) is adapted to perform the method steps as defined in any one of claims 11 to 17.

## Patentansprüche

1. Verfahren, das in einer Benutzereinrichtung durchgeführt wird, das Verfahren umfassend den Schritt des Bereitstellens von Fähigkeitsinformationen in einem Fähigkeitsbehälter in Bezug auf die Benutzereinrichtung, wobei die Fähigkeitsinformationen einen Hinweis auf die früheste Access-Stratum-Version (AS-Version) bereitstellen, die eine Benutzereinrichtungskategorie mit geringer Komplexität definiert, die von der Benutzereinrichtung unterstützt wird (Schritt 201), wobei die Fähigkeitsinformationen ein Protokollfeld in dem Fähigkeitsbehälter umfassen, das sich auf die Benutzereinrichtung bezieht, wobei das Protokollfeld ein Vorgänger-Informationselement umfasst, das wiederverwendet wird, um die Fähigkeitsinformationen bereitzustellen, und wobei das Vorgänger-Informationselement ein *AccessStratumRelease*-Informationselement umfasst.

2. Verfahren nach Anspruch 1, wobei das Protokollfeld ein zusätzliches Protokollfeld umfasst.

3. Verfahren nach Anspruch 2, wobei das zusätzliche Protokollfeld einen Hinweis darauf bereitstellt, ob die früheste unterstützte AS-Version früher als Freigabe 12 ist.

4. Verfahren nach Anspruch 3, wobei das Vorhandensein des zusätzlichen Protokollfeldes in dem Fähigkeitsbehälter der UE einen Hinweis für andere Netzknoten darauf bereitstellt, dass die UE nicht in der Lage ist, andere UE-Kategorien früherer AS-Versionen zu unterstützen.

5. Verfahren nach Anspruch 3, wobei das Fehlen des zusätzlichen Protokollfeldes in dem Fähigkeitsbehälter der UE einen Hinweis für andere Netzknoten darauf bereitstellt, dass die UE andere UE-Kategorien früherer AS-Versionen unterstützen kann, einschließlich Kategorien 1 bis 5 von Freigabe 8 und darüber.

6. Verfahren nach einem der Ansprüche 2 bis 5, wobei das zusätzliche Protokollfeld einen Ein-Bit-Indikator umfasst oder ein *LegacyCategory*-Informationselement referenziert.

7. Verfahren nach Anspruch 1, wobei das *AccessStratumRelease-*Informationselement eine aufgezählte Liste der AS-Freigabewerte umfasst, die von der UE unterstützt werden.

8. Verfahren nach Anspruch 1, wobei das *AccessStratumRelease-*Informationselement ferner einen oder mehrere Ersatzwerte zur Verwendung mit zukünftigen AS-Freigabewerten umfasst.

9. Verfahren nach einem der Ansprüche 1 bis 8, wobei das Protokollfeld ein *earliestSupported-AS*-Protokollfeld zum Anzeigen der frühesten Access-Stratum-Freigabe umfasst, die eine Kategorie geringer Komplexität definiert, die durch die UE unterstützt wird.

10. Verfahren, das in einer Zielbasisstation während einer Handover-Vorbereitungsprozedur einer Benutzereinrichtung (UE) von einer Quellenbasisstation zu der Zielbasisstation durchgeführt wird, das Verfahren umfassend die Schritte:
Empfangen eines Fähigkeitsbehälters, der sich auf die Benutzereinrichtung bezieht (Schritt 401);
Interpretieren von Fähigkeitsinformationen in dem Fähigkeitsbehälter, um die früheste Access-Stratum-Version (AS-Version) zu bestimmen, die eine Benutzereinrichtungskategorie niedriger Komplexität definiert, die von der Benutzereinrichtung unterstützt wird (Schritt 403), wobei die Fähigkeitsinformationen ein Protokollfeld in dem Fähigkeitsbehälter umfassen,
das sich auf die Benutzereinrichtung bezieht, wobei das Protokollfeld ein Vorgänger-Informationselement umfasst, das wiederverwendet wird, um die Fähigkeitsinformationen bereitzustellen, und wobei das Vorgänger-Informationselement ein *AccessStratumRelease*-Informationselement umfasst; und
Verwenden des Ergebnisses der Interpretation, um zu bestimmen, ob der Handover-Vorgang mit der Benutzereinrichtung fortgesetzt werden soll (Schritt 405).

11. Verfahren nach Anspruch 10, wobei der Interpretationsschritt Folgendes umfasst:
Bestimmen, ob ein zusätzliches Protokollfeld vorhanden ist oder fehlt, wobei das zusätzliche Protokollfeld einen Hinweis darauf bereitstellt, ob die früheste unterstützte AS-Version früher als Freigabe 12 ist.

12. Verfahren nach Anspruch 11, wobei das Bestimmen des Vorhandenseins des zusätzlichen Protokollfelds in den Fähigkeitsinformationen, die sich auf die UE beziehen, einen Hinweis darauf bereitstellt, dass die UE nicht in der Lage ist, andere UE-Kategorien früherer AS-Versionen zu unterstützen.

13. Verfahren nach Anspruch 12, wobei nach einer Bestimmung, dass das zusätzliche Protokollfeld vorhanden ist, das Verfahren ferner den Schritt des Unterbrechens einer Handover-Prozedur mit der UE umfasst.

14. Verfahren nach Anspruch 11, wobei das Bestimmen des Fehlens des zusätzlichen Protokollfeldes in den Fähigkeitsinformationen bezüglich der UE einen Hinweis darauf bereitstellt, dass die UE andere UE-Kategorien früherer AS-Versionen unterstützen kann, einschließlich Kategorien 1 bis 5 von Freigabe 8 und darüber.

15. Verfahren nach Anspruch 14, wobei nach einer Bestimmung, dass das zusätzliche Protokollfeld fehlt, das Verfahren ferner den Schritt des Fortsetzens einer Handover-Prozedur mit der UE umfasst.

16. Verfahren nach einem der Ansprüche 11 bis 15, wobei das zusätzliche Protokollfeld einen Ein-Bit-Indikator umfasst oder ein *LegacyCategory*-Informationselement referenziert.

17. Verfahren nach einem der Ansprüche 10 bis 16, wobei das Fehlen eines bestimmten Protokollfeldes anzeigt, dass die UE alle Kategorien aus einer vorbestimmten Version des RRC-Protokolls und darüber unterstützen kann.

18. Benutzereinrichtung (700), umfassend:
ein Prozessormodul (701); und
ein Protokollfeldmodul (703);
wobei das Protokollfeldmodul darauf ausgelegt ist, Fähigkeitsinformationen in einem Fähigkeitsbehälter in Bezug auf die Benutzereinrichtung bereitzustellen, wobei die Fähigkeitsinformationen einen Hinweis auf die früheste Access-Stratum-Version (AS-Version) bereitstellen, die eine Kategorie von Benutzereinrichtungen mit geringer Komplexität definiert, die von der Benutzereinrichtung unterstützt wird, wobei die Fähigkeitsinformationen ein Protokollfeld in dem Fähigkeitsbehälter umfassen, das sich auf die Benutzereinrichtung bezieht, wobei das Protokollfeld ein Vorgänger-Informationselement umfasst, das wiederverwendet wird, um die Fähigkeitsinformationen bereitzustellen, und wobei das Vorgänger-Informationselement ein *AccessStratumRelease*-Informationselement umfasst.

19. Benutzereinrichtung (700) nach Anspruch 18, wobei das Prozessormodul (701) darauf ausgelegt ist, ein Verfahren nach einem der Ansprüche 2 bis 12 durchzuführen.

20. Netzknoten (800) eines Kommunikationsnetzes, wobei der Netzknoten (800) umfasst:
ein Verarbeitungsmodul (801);
ein Empfangsmodul (803), das darauf ausgelegt ist, einen Fähigkeitsbehälter aufzunehmen, der sich auf eine Benutzereinrichtung bezieht; und
ein Interpretationsmodul (805), das darauf ausgelegt ist, Fähigkeitsinformationen in dem Fähigkeitsbehälter zu interpretieren, um die früheste Access-Stratum-Version (AS-Version) zu bestimmen, die eine Benutzereinrichtungskategorie niedriger Komplexität definiert, die von der Benutzereinrichtung unterstützt wird, wobei die Fähigkeitsinformationen ein Protokollfeld in dem Fähigkeitsbehälter umfassen, das sich auf die Benutzereinrichtung bezieht, wobei das Protokollfeld ein Vorgänger-Informationselement umfasst, das wiederverwendet wird, um die Fähigkeitsinformationen bereitzustellen, und wobei das Vorgänger-Informationselement ein *AccessStratumRelease-*Informationselement umfasst;
wobei das Prozessormodul (801) darauf ausgelegt ist, das Ergebnis des Interpretationsmoduls zu verwenden, um zu bestimmen, ob ein Handover-Vorgang mit der Benutzereinrichtung durchgeführt werden soll.

21. Netzknoten (800) nach Anspruch 20, wobei das Prozessormodul (801) darauf ausgelegt ist, die Verfahrensschritte nach einem der Ansprüche 11 bis 17 durchzuführen.

## Revendications

1. Procédé effectué dans un équipement utilisateur, le procédé comprenant l'étape de fourniture d'informations de capacité dans un conteneur de capacité relatives à l'équipement utilisateur, dans lequel les informations de capacité fournissent une indication de la version la plus ancienne de la couche d'accès, AS, qui définit une catégorie d'équipement utilisateur basse complexité qui est prise en charge par l'équipement utilisateur (étape 201), dans lequel les informations de capacité comprennent un champ de protocole dans le conteneur de capacité se rapportant à l'équipement utilisateur, dans lequel le champ de protocole comprend un élément d'information hérité qui est réutilisé afin d'obtenir les informations de capacité et dans lequel l'élément d'information hérité comprend un élément d'information *AccessStratumRelease.*

2. Procédé selon la revendication 1, dans lequel le champ de protocole comprend un champ de protocole supplémentaire.

3. Procédé selon la revendication 2, dans lequel le champ de protocole supplémentaire fournit une indication quant à savoir si la version d'AS la plus ancienne prise en charge est antérieure à l'édition 12.

4. Procédé selon la revendication 3, dans lequel la présence du champ de protocole supplémentaire dans le conteneur de capacité de l'UE fournit une indication à d'autres noeuds de réseau que l'UE n'est pas capable de prendre en charge d'autres catégories d'UE de versions d'AS antérieures.

5. Procédé selon la revendication 3, dans lequel l'absence du champ de protocole supplémentaire dans le conteneur de capacité de l'UE fournit une indication à d'autres noeuds de réseau que l'UE est capable de prendre en charge d'autres catégories d'UE de versions d'AS antérieures, comprenant les catégories 1 à 5 de Rel-8 et supérieures.

6. Procédé selon l'une quelconque des revendications 2 à 5, dans lequel le champ de protocole supplémentaire comprend un indicateur d'un bit ou fait référence à un élément d'information *LegacyCategory.*

7. Procédé selon la revendication 1, dans lequel l'élément d'information *AccessStratumRelease* comprend une liste énumérée des valeurs d'édition d'AS prises en charge par l'UE.

8. Procédé selon la revendication 1, dans lequel l'élément d'information *AccessStratumRealease* comprend en outre une ou plusieurs valeurs de réserve pour une utilisation avec des valeurs d'éditions d'AS futures.

9. Procédé selon l'une quelconque des revendications 1 à 8, dans lequel le champ de protocole comprend un champ de protocole *earliestSupported-AS,* pour indiquer l'édition de couche d'accès la plus ancienne qui définit une catégorie de basse complexité qui est prise en charge par l'UE.

10. Procédé exécuté dans une station de base cible durant une procédure de préparation de transfert d'un équipement utilisateur (UE) depuis une station de base source vers la station de base cible, le procédé comprenant les étapes consistant à :
recevoir un conteneur de capacité relatif à l'équipement utilisateur (étape 401) ;
interpréter les informations de capacité du conteneur de capacité afin de déterminer la version de couche d'accès (AS) la plus ancienne qui définit une catégorie d'équipement utilisateur basse complexité qui est prise en charge par l'équipement utilisateur (étape 403), dans lequel les informations de capacité comprennent un champ de protocole dans le conteneur de capacité relatif à l'équipement utilisateur, dans lequel le champ de protocole comprend un élément d'information hérité qui est réutilisé pour fournir les informations de capacité et dans lequel l'élément d'information hérité comprend un élément d'information *AccessStratumRelease* ; et
utiliser le résultat de l'interprétation pour déterminer si l'opération de transfert doit être poursuivie avec l'équipement utilisateur (étape 405).

11. Procédé selon la revendication 10, dans lequel l'étape d'interprétation comprend :
déterminer si un champ de protocole supplémentaire est présent ou absent, dans lequel le champ de protocole supplémentaire fournit une indication quant à savoir si la version d'AS prise en charge la plus ancienne est antérieure à l'édition 12.

12. Procédé selon la revendication 11, dans lequel la détermination de la présence du champ de protocole supplémentaire dans les informations de capacité relatives à l'UE fournit une indication selon laquelle l'UE n'est pas capable de prendre en charge d'autres catégories d'UE de versions d'AS antérieures.

13. Procédé selon la revendication 12, dans lequel après une détermination que le champ de protocole supplémentaire est présent, le procédé comprend en outre l'étape consistant à interrompre une procédure de transfert avec l'UE.

14. Procédé selon la revendication 11, dans lequel la détermination de l'absence du champ de protocole supplémentaire dans les informations de capacité relatives à l'UE fournit une indication que l'UE est capable de prendre en charge d'autres catégories d'UE de versions d'AS antérieures, incluant les catégories 1 à 5 de Rel 8 et supérieures.

15. Procédé selon la revendication 14, dans lequel après une détermination que le champ de protocole supplémentaire est absent, le procédé comprend en outre l'étape consistant à continuer une procédure de transfert avec l'UE.

16. Procédé selon l'une quelconque des revendications 11 à 15, dans lequel le champ de protocole supplémentaire comprend un indicateur d'un bit ou fait référence à un élément d'information *LegacyCategory.*

17. Procédé selon l'une quelconque des revendications 10 à 16, dans lequel l'absence d'un champ de protocole particulier indique que l'UE peut prendre en charge toutes les catégories d'une version prédéterminée du protocole RRC et supérieures.

18. Équipement utilisateur (700) comprenant :
un module processeur (701) ; et
un module de champ de protocole (703) ;
dans lequel le module de champ de protocole est apte à fournir des informations de capacité dans un conteneur de capacité relatives à l'équipement utilisateur, dans lequel les informations de capacité fournissent une indication de la version la plus ancienne de la couche d'accès (AS) qui définit une catégorie d'équipement utilisateur basse complexité qui est prise en charge par l'équipement utilisateur, dans lequel les informations de capacité comprennent un champ de protocole dans le conteneur de capacité se rapportant à l'équipement utilisateur, dans lequel le champ de protocole comprend un élément d'information hérité qui est réutilisé afin d'obtenir les informations de capacité et dans lequel l'élément d'information hérité comprend un élément d'information *AccessStratumRelease.*

19. Équipement utilisateur (700) selon la revendication 18, dans lequel le module de processeur (701) est apte à exécuter un procédé tel que défini dans l'une quelconque des revendications 2 à 12.

20. Noeud de réseau (800) pour un réseau de communications, le noeud de réseau (800) comprenant :
un circuit de traitement (801) ;
un module de réception (803) apte à recevoir un conteneur de capacité relatif à un équipement utilisateur ; et
un module d'interprétation (805) apte à interpréter les informations de capacité du conteneur de capacité afin de déterminer la version de couche d'accès (AS) la plus ancienne qui définit une catégorie d'équipement utilisateur basse complexité qui est prise en charge par l'équipement utilisateur, dans lequel les informations de capacité comprennent un champ de protocole dans le conteneur de capacité relatif à l'équipement utilisateur, dans lequel le champ de protocole comprend un élément d'information hérité qui est réutilisé pour fournir les informations de capacité et dans lequel l'élément d'information hérité comprend un élément d'information *AccessStratumRelease ;*
dans lequel le module de processeur (801) est apte à utiliser le résultat du module d'interprétation pour déterminer si une opération de transfert doit être effectuée avec l'équipement utilisateur.

21. Noeud de réseau (800) selon la revendication 20, dans lequel le module de processeur (801) est apte à exécuter les étapes de procédé telles que définies dans l'une quelconque des revendications 11 à 17.
